# EUROPÄISCHE PATENTSCHRIFT

(11) **EP 3 016 792 B1**
(45) Veröffentlichungstag und Bekanntmachung des Hinweises auf die Patenterteilung: **06.09.2017**
(21) Anmeldenummer: 14727203.3
(22) Anmeldetag: 28.05.2014
(51) Int. Cl.: B29C 47/88, B29C 47/00, B29C 47/12, B29C 47/20, B29C 55/28

(54) **EXTRUSIONSWERKZEUG FÜR EINEN FOLIENBLASKOPF SOWIE BLASKOPF**
EXTRUSION DIE FOR A BLOWN FILM DIE AND BLOWN FILM DIE
FILIERE D'EXTRUSION POUR UNE TETE DE SOUFFLAGE ET TETE DE SOUFFLAGE

(30) Priorität: 02.07.2013 DE 102013106952; 27.11.2013 DE 102013113101
(43) Veröffentlichungstag der Anmeldung: 11.05.2016
(73) Patentinhaber: Windmöller & Hölscher KG, 49525 Lengerich (DE)
(72) Erfinder: BAUMHÖFENER, Andreas, 49536 Lienen (DE); LIESBROCK, Bernd, 49525 Lengerich (DE)
(86) Internationale Anmeldenummer: PCT/EP2014/061031
(87) Internationale Veröffentlichungsnummer: WO 2015/000643

(56) Entgegenhaltungen:
- EP-A1- 0 641 638
- EP-B1- 1 346 813
- DE-A1- 2 555 848

## Beschreibung

Die Erfindung betrifft ein Extrusionswerkzeug für einen Folienblaskopf einer Schlauchextrusionsanlage zur Extrusion eines Schlauches aus einer Kunststoffschmelze mit einem Werkzeugkörper, der einen Schmelzkanal zur Erzeugung des Schlauches aufweist, wobei der Schmelzkanal eine ringförmige Austrittsöffnung für die Kunststoffschmelze aufweist, einer durch den Werkzeugkörper sich erstreckenden Luftführung, durch die Kühlluft durch eine Öffnung der Luftführung zur Schlauchinnenkühlung strömbar ist und durch die aus der Schlauchinnenkühlung erwärmte Abluft durch die Öffnung der Luftführung absaugbar ist. Des Weiteren betrifft die Erfindung einen Blaskopf für eine Schlauchextrusionsanlage zur Extrusion eines Schlauches.

Aus der EP 1 346 813 B1 ist ein Folienblaskopf zur Extrusion eines Schlauches offenbart, wobei eine Luftführung für die Kühlluft und separat für die Abluft vorgesehen ist. Die Kühlluft verläuft durch einen zentralen Kanal, der durch das Extrusionswerkzeug bis zur Etagenkühlung des Folienblaskopfes sich erstreckt, wobei die Kühlluft bis zu einem Luftverteiler strömt und dort die Luft über diverse Schläuche einer Vergleichsmäßigungseinrichtung zugeführt wird. Von der Vergleichsmäßigungseinrichtung gelangt die Kühlluft über querstehende Lamellen zu Kühllippen. Aus dem Schlauch abgesaugte Warmluft (Abluft) gelangt an den Schläuchen des Luftverteilers vorbei in den Ringkanal, von dort aus die Abluft aus dem Folienblaskopf wegtransportiert wird. Einer der Nachteile dieser Vorrichtung ist, dass ein großer Bauraum für den Folienblaskopf, insbesondere für die Kühleinheit notwendig ist. Des Weiteren ist der genannte Folienblaskopf konstruktiv aufwendig, da insbesondere die Kühlluft komplett über einen zentralen Kanal bis zum Luftverteiler geleitet werden muss, wo sie um 180° umgelenkt wird und wieder in Richtung Extrusionswerkzeug geleitet wird, um im unteren Bereich der Kühleinheit durch die Kühllippen geführt zu werden, um eine Schlauchinnenkühlung zu bewirken. Somit entsteht ein langer Strömungsweg für die Kühlluft, der ebenfalls mit hohen Druckverlusten verbunden ist. Ein weiterer Nachteil der genannten Vorrichtung ist, dass ein größerer Volumenstrom an Kühlluft bereits im oberen Bereich der Kühleinheit durch die Kühllippen strömt und somit mit einer geringeren Volumenmenge durch die unteren Kühllippen, die nah am Extrusionswerkzeug angeordnet sind, strömt. Da jedoch besonders im unteren Bereich der Kühleinheit eine hohe Kühlleistung erforderlich ist, da der aus der ringförmigen Austrittsöffnung austretende Schlauch noch eine hohe Temperatur aufweist, ist der aus dem Stand der Technik genannte Folienblaskopf hinsichtlich seiner Kühlleistung optimierbar.
Die Aufgabe der vorliegenden Erfindung ist es die oben genannten Nachteile zu vermeiden, insbesondere ein Extrusionswerkzeug für einen Folienblaskopf einer Schlauchextrusionsanlage sowie einen Blaskopf für eine Schlauchextrusionsanlage zu schaffen, wobei ein kompakter Gesamtaufbau geschaffen wird und gleichzeitig eine verbesserte Effizienz bei der Schlauchinnenkühlung erzielbar ist.
Die Aufgabe der vorliegenden Erfindung wird durch sämtliche Merkmale des Patentanspruches 1 gelöst. In den abhängigen Patentansprüchen 2 bis 14 sind mögliche Ausführungsformen der Erfindung dargestellt. Des Weiteren wird die Erfindung durch einen Blaskopf mit sämtlichen Merkmalen des Anspruches 15 gelöst. In dem abhängigen Anspruch 16 sind mögliche Ausführungsformen beschrieben. Gemäß der Erfindung wird ein Extrusionswerkzeug vorgeschlagen für einen Folienblaskopf einer Schlauchextrusionsanlage zur Extrusion eines Schlauches aus einer Kunststoffschmelze mit einem Werkzeugkörper, der einen Schmelzkanal zur Erzeugung des Schlauches aufweist, wobei der Schmelzkanal eine ringförmige Austrittsöffnung für die Kunststoffschmelze aufweist, einer durch den Werkzeugkörper sich erstreckenden Luftführung, durch die Kühlluft durch eine Öffnung der Luftführung zur Schlauchinnenkühlung strömbar ist und durch die aus der Schlauchinnenkühlung erwärmte Abluft durch die Öffnung der Luftführung absaugbar ist.
Erfindungsgemäß ist ein Extrusionswerkzeug vorgesehen, wobei die Luftführung einen zentralen Kanal für die Kühlluft und einen Ringkanal, der den zentralen Kanal umfasst, für die Abluft aufweist, wobei ein Lufttauscher derart in der Luftführung angeordnet ist, dass der Lufttauscher die Kühlluft vom zentralen Kanal nach Außen zum Werkzeugkörper in Richtung der Öffnung der Luftführung lenkt und die Abluft im Wesentlichen im Gegenstrom zur Kühlluft nach Außen zum Werkzeugkörper zum Ringkanal leitet, wobei der Lufttauscher eine zur Öffnung der Luftführung zugewandte Oberseite und eine der Öffnung der Luftführung abgewandte Unterseite aufweist, wobei der Kühlluftkanal an der Unterseite als Kernkühlluftkanal ausgebildet ist, der durch einen Mantelabluftkanal des Abluftkanals umfasst ist, wobei in Erstreckungsrichtung zur Oberseite des Lufttauschers die Geometrie des Kernkühlluftkanals sich in einen Mantelkühlluftkanal verändert, der an der Oberseite einen Kernabluftkanal umfasst. Der Lufttauscher befindet sich zwischen dem zentralen Kanal/Ringkanal und der Öffnung, durch die die Kühlluft zur Schlauchinnenkühlung austritt bzw. durch die die erwärmte Abluft zurück in Richtung Lufttauscher strömt. Da die Kühlluft im zentralen Kanal strömt und der Ringkanal, in dem die erwärmte Abluft abströmt, den zentralen Kanal umfasst, erfolgt aufgrund der hohen Temperatur des Werkzeugkörpers keine wesentliche Temperaturerhöhung der Kühlluft. Die im Ringkanal strömende Abluft verhindert, dass die Kühlluft im zentralen Kanal aufgewärmt wird. Lediglich im Bereich der Öffnung der Luftführung wird über den Lufttauscher die Kühlluft vom zentralen Kanal nach außen zum Werkzeugkörper hin abgelenkt und geführt, sodass über einen sehr kurzen Strömungsweg die Kühlluft zur Schlauchinnenkühlung geleitet werden kann. Die Kühlluft verlässt die Luftführung an ihren Randbereich den Werkzeugkörper bzw. das Extrusionswerkzeug verlässt, um direkt für die Schlauchinnenkühlung zum Einsatz zu kommen. Hierdurch lassen sich Druckverluste, aufgrund des sehr geringen Strömungsweges, den die Kühlluft aufweist, verringern. Zudem lässt sich eine kompakte Baueinheit bezogen auf das Extrusionswerkzeug und bezogen auf den Folienblaskopf erzeugen, der die am Randbereich der Luftführung austretende Kühlluft ohne konstruktiven Aufwand aufnehmen kann, um die Kühlluft zielgerichtet für die Schlauchinnenkühlung einzusetzen. Der Schlauch ist vorteilhafterweise eine dünne Folie aus Kunststoff, die beispielsweise mehrere Funktionsschichten wie 3, 5, 7, 9 oder 11 aufweisen kann.

Vorteilhafterweise kann der Lufttauscher im Bereich der Öffnung der Luftführung im Werkzeugkörper angeordnet sein. Bei dieser Ausführungsform wird erreicht, dass möglichst eine geringe Wärmemenge des Werkzeugkörpers die Kühlluft in ihrer Temperatur beeinflussen kann. Ebenfalls kann es vorgesehen sein, dass der Lufttauscher beabstandet zur Öffnung der Luftführung im Werkzeugkörper angeordnet ist. Das bedeutet, dass der Lufttauscher tiefer innerhalb des Werkzeugkörpers innerhalb der Luftführung einsetzbar ist, wobei die Kühlluft entlang einer größeren Strömungsstrecke außen am erwärmten Werkzeugkörper strömt bis die Kühlluft durch die Öffnung der Luftführung strömend den Werkzeugkörper zur Schlauchinnenkühlung verlässt. Durch die letztgenannte Ausführungsvariante lässt sich eine Vergleichmäßigung des Geschwindigkeitsprofils der Kühlluft beim Austritt durch die Öffnung der Luftführung erzielen, wodurch die Folienqualität bei der Herstellung innerhalb der Schlauchextrusionsanlage optimiert werden kann.

In einer weiteren die Erfindung verbessernden Maßnahme kann der Werkzeugkörper derart ausgeführt sein, dass die Position des Lufttauschers innerhalb der Luftführung variabel einstellbar ist. Hierbei ist es denkbar, dass der Lufttauscher manuell durch den Monteur und/oder über einen Antrieb innerhalb der Luftführung bzgl. seiner Position eingestellt werden kann. Ebenfalls kann vorgesehen sein, dass die Querschnittsflächen, durch die die Kühlluft und/oder die Abluft strömt, des Lufttauschers in ihrer Größe einstellbar sind. Auch hier lässt sich eine Optimierung der Folienqualität bei der Herstellung innerhalb einer Schlauchextrusionsanlage weiter verbessern.

Zudem kann das Extrusionswerkzeug derart weitergebildet sein, dass ein Filterelement am und/oder im Lufttauscher angeordnet ist, der eine Vergleichmäßigung des Geschwindigkeitsprofils der Kühlluft bewirkt. Zum Beispiel ist es denkbar, dass im Bereich der Öffnung der Luftführung das Filterelement vorgesehen ist. Diese Vergleichmäßigungseinrichtung stellt eine gleichmäßige Luftströmung der Kühlluft bei der Schlauchinnenkühlung sicher.

Vorteilhafterweise ist das Extrusionswerkzeug derart ausgebildet, dass der Lufttauscher mindestens einen Kühlluftkanal und mindestens einen Abluftkanal aufweist, die voneinander getrennt sind. Besonders vorteilhaft ist, dass der Lufttauscher mindestens zwei Kühlluftkanäle und mindestens zwei Abluftkanäle aufweist, wobei insbesondere der Lufttauscher mindestens drei Kühlluftkanäle und mindestens drei Abluftkanäle aufweist. Eine Vielzahl an Kühlluftkanälen und Abluftkanälen bewirkt vorteilhafterweise eine Vergleichmäßigung der Luftströmung und/oder des Geschwindigkeitsprofils der Kühlluft und/oder der Abluft. Zweckmäßigerweise kann mindestens ein Kühlluftkanal und/oder mindestens ein Abluftkanal einen spiralförmigen Verlauf aufweisen. Hierdurch wird eine kompakte Bauform des Lufttauschers erzeugt, mit der wirksam Kühlluft vom zentralen Kanal nach außen zum Werkzeugkörper in Richtung der Öffnung der Luftführung lenkbar ist und die Abluft im Wesentlichen im Gegenstrom zur Kühlluft nach außen zum Werkzeugkörper zum Ringkanal leitbar ist. In einer weiteren Ausführungsform können mehrere Kernkühlluftkanäle und mehrere Mantelabluftkanäle und mehrere Mantelkühlluftkanäle und mehrere Kernabluftkanäle vorgesehen sein. Während des Betriebes durchströmt die Kühlluft zunächst den zentralen Kanal der Luftführung bis die Kühlluft an der Unterseite des Lufttauschers in den mindestens einen Kernkühlluftkanal eintritt und in den mindestens einen Mantelkühlluftkanal einströmt bis die Kühlluft an der Oberseite des Lufttauschers durch die Öffnung der Luftführung das Extrusionswerkzeug für die Schlauchinnenkühlung verlässt. Gleichzeitig dringt erwärmte Abluft aufgrund der Schlauchinnenkühlung in den Kernabluftkanal an der Oberseite des Lufttauschers ein. Die Abluft wird aufgrund der Geometrie des Lufttauschers nach außen in Richtung Werkzeugkörper abgelenkt und tritt in mindestens einen Mantelabluftkanal ein, der an der Unterseite des Lufttauschers den mindestens einen oder mehrere Kernkühlluftkanäle umfasst. Die Abluft verlässt den Mantelabluftkanal an der Unterseite des Lufttauschers und strömt in den Ringkanal der Luftführung hinein, in dem die Abluft aus dem Extrusionswerkzeug abgesaugt wird. Vorteilhafterweise ist die Querschnittsgeometrie an der Unterseite des Lufttauschers identisch mit der Querschnittsgeometrie an der Oberseite des Lufttauschers. Das bedeutet, dass die Querschnittsgeometrie des Mantelabluftkanals im Wesentlichen der Querschnittsgeometrie des Mantelkühlluftkanals entspricht bzw. die Querschnittsgeometrie des Kernabluftkanals der Querschnittsgeometrie des Kernkühlluftkanals entspricht. Ein Vorteil ist hierbei, dass ein Montagefehler nicht auftreten kann, da die Oberseite des Lufttauschers auch als Unterseite innerhalb der Luftführung dienen kann.

Des Weiteren kann es erfindungsgemäß vorgesehen sein, dass an der Unterseite der Luftführung die Kernkühlluftkanäle aneinander anliegen und die Mantelabluftkanäle aneinander anliegen, wobei die Mantelabluftkanäle die Kernkühlluftkanäle umfassen, und an der Oberseite der Luftführung die Kernabluftkanäle aneinander anliegen und die Mantelkühlluftkanäle aneinander anliegen, wobei die Mantelkühlluftkanäle die Kernabluftkanäle umfassen. Vorteilhafterweise kann das Extrusionswerkzeug zudem eine Zwischenzone innerhalb des Lufttauschers aufweisen, die zwischen der Oberseite und der Unterseite der Luftführung liegt, wobei in der Zwischenzone mehrere Kühlluftkanäle und Abluftkanäle verlaufen, wobei jeder Kühlluftkanal zwischen zwei Abluftkanälen angeordnet ist. Die Kanäle für die Abluft und Kühlluft können in der Zwischenzone sternförmig zueinander angeordnet sein. Über die Zwischenzone wird die Kühlluft von der Unterseite des Lufttauschers ausgehend aus dem mindestens einen Kernkühlluftkanal nach außen in den mindestens einen Mantelkühlluftkanal geleitet. In der Zwischenzone erfolgt somit eine Führung der Kühlluft in Richtung Werkzeugkörper, das bedeutet nach außen. Die Abluft hingegen wird im Gegenstrom zur Kühlluft nach außen ausgehend von dem mindestens einen Kernabluftkanal in Richtung des mindestens einen Mantelabluftkanals über die Zwischenzone geleitet. Über die Zwischenzone lässt sich eine sehr kompakte Luftführung bezogen auf die Kühlluft und die Abluft innerhalb des Lufttauschers bewirken.

Vorteilhafterweise kann der Lufttauscher an der Oberseite und/oder an der Unterseite ein Stegelement aufweisen, das als Montagehilfe dient, wobei das Stegelement sich vorsprungartig aus der Oberseite und/oder aus der Unterseite des Lufttauschers erstreckt. In der Regel erfolgt eine Montage eines Abluftrohres an der Oberseite des Lufttauschers, um die erwärmte Abluft in die Luftführung des Extrusionswerkzeuges einzuleiten. An der Unterseite des Lufttauschers ist ebenfalls ein Abluftrohr vorgesehen, um die Abluft aus dem Mantelabluftkanal zuverlässig abzusaugen. Gleichzeitig kann ein Rohr an der Unterseite des Lufttauschers befestigt sein, um dem Kernkühlluftkanal Kühlluft bereitzustellen. Das Stegelement an der Oberseite sowie an der Unterseite kann als Positionierungshilfe für den Monteur dienen, der das jeweilige Abluftrohr an der Oberseite bzw. an der Unterseite des Lufttauschers befestigt.

Vorteilhafterweise ist der Lufttauscher als ein Lasersinterbauteil ausgeführt. Durch das Lasersintern lassen sich auch aufwendige Geometrien des Lufttauschers abbilden, wodurch der Herstellungsaufwand reduzierbar ist und/oder die Herstellungsgenauigkeit erhöht wird. Alternativ und/oder zusätzlich kann der Lufttauscher als Keramikbauteil ausgebildet sein, wodurch der Lufttauscher eine hohe Hitzebeständigkeit, eine verbesserte Korrosionsbeständigkeit und eine geringe thermische Ausdehnung aufweist, welches bei der vorliegenden Erfindung von Vorteil sein kann.

Zudem kann ein erfindungsgemäßes Extrusionswerkzeug derart ausgebildet sein, dass die Luftführung innerhalb des Werkzeugkörpers mindestens einen Luftführungskörper aufweist, in dem der zentrale Kanal und der Ringkanal gebildet sind. Der Luftführungskörper umfasst somit den zentralen Kanal und den Ringkanal, wobei beispielsweise der Luftführungskörper rohrartig ausgeführt sein kann. Des Weiteren ist es denkbar, dass die Erstreckung des Luftführungskörpers linear ausgebildet ist. Ebenfalls kann es in Abhängigkeit von den geometrischen Gegebenheiten in dem Extrusionswerkzeug und/oder im Werkzeugkörper notwendig sein, eine andersartige Erstreckung des Luftführungskörpers vorzusehen, wie z.B. eine gekrümmte Erstreckung etc. Der Luftführungskörper kann vorteilhafterweise materialeinheitlich mit dem zentralen Kanal und/oder dem Ringkanal ausgeführt sein. Zudem ist es denkbar, dass der zentrale Kanal und/oder der Ringkanal mit dem Luftführungskörper eine gemeinsame Baueinheit bilden. Vorteilhafterweise erfolgt eine Befestigung des Luftführungskörpers an der Unterseite des Lufttauschers, wobei die Befestigung form- und/oder kraft- und/oder stoffschlüssig sein kann.

Ebenfalls kann die Erfindung vorsehen, dass mehrere Luftführungskörper vorgesehen sind, wobei insbesondere jedem Luftführungskörper ein eigener Lufttauscher zugeordnet ist. Hierdurch lässt sich die Effizienz des Extrusionswerkzeugs steigern.

Zudem kann das Extrusionswerkzeug derart ausgebildet sein, dass ein zentraler Luftführungskörper an dem Lufttauscher angeordnet ist, wobei die dem Lufttauscher abgewandte Seite des zentralen Luftführungskörpers mit mehreren seitlich verlaufenden Luftführungskörpern verbunden ist. Jeder Lüftungskörper weist hierbei einen zentralen Kanal und einen Ringkanal auf, wobei der zentrale Lüftungskörper unmittelbar an dem Lufttauscher angeschlossen ist, und beispielsweise unterhalb des zentralen Lüftungskörpers die seitlich verlaufenden Luftführungskörper liegen. Das bedeutet, dass der zentrale Luftführungskörper zwischen dem Lufttauscher und den seitlich verlaufenden Luftführungskörpern positioniert ist. In einem derartigen Konstruktionsfall kann lediglich ein Lufttauscher genügen, wobei die seitlich verlaufenden Luftführungskörper im unteren Bereich des zentralen Luftführungskörpers angeordnet bzw. befestigt sind. In Abhängigkeit vom Anforderungsprofil des herzustellenden Schlauches kann eine derartige Ausführungsform des Extrusionswerkzeugs vorteilhaft sein, insbesondere kann die Effizienz hierdurch weiter gesteigert werden. Zudem ist bei dieser Ausführungsform lediglich nur ein Lufttauscher notwendig, wodurch der Bauteilaufwand des Extrusionswerkzeug gering gehalten werden kann.

In einer möglichen Ausgestaltung der Erfindung kann die Achse der Längserstreckung des Lufttauschers auf der Achse der Längserstreckung des zentralen Luftführungskörpers oder des Luftführungskörpers liegen, insbesondere kann die Achse der Längserstreckung des seitlich verlaufenden Luftführungskörpers einen Winkel zur Achse der Längserstreckung des Lufttauschers aufweisen.

Des Weiteren wird die oben genannte Aufgabe durch einen Blaskopf für eine Schlauchextrusionsanlage zur Extrusion eines Schlauches aus einer Kunststoffschmelze gelöst mit einem Extrusionswerkzeug, der oben genannten Art, und einer Kühleinheit, die auf dem Extrusionswerkzeug angeordnet ist, wobei die Kühleinheit Auslasskanäle für die Schlauchinnenkühlung, durch die die Kühlluft leitbar ist, und mindestens ein Abluftrohr für die Absaugung der Abluft aufweist. Hierbei ist eine Vielzahl an Auslasskanälen denkbar, die insbesondere radial - bezogen auf die Luftführung bzw. auf das Abluftrohr der Kühleinheit - in Richtung Schlauch die Kühlluft leiten. Die Vorteile des Blaskopfes entsprechen im Wesentlichen den Vorteilen, die bereits für das erfindungsgemäße Extrusionswerkzeug beschrieben sind. Im Extrusionswerkzeug werden im Wesentlichen zwei Strömungen geführt, wobei die Kühlluft durch den Lufttauscher in Richtung der Auslasskanäle der Kühleinheit geführt wird und die warme Abluft durch das Abluftrohr der Kühleinheit in Richtung Lufttauscher geleitet wird. Innerhalb des Lufttauschers verlaufen Kühlluft und Abluft im Wesentlichen im Gegenstrom. Die Kühlluft verläuft innerhalb der Luftführung sowie im Lufttauscher größtenteils zentral und wird durch einen Ringkanal, in den die Abluft strömt, sowie durch mindestens einen Mantelabluftkanal, in dem die Abluft durch den Lufttauscher geleitet wird, umschlossen. Hierdurch wird vermieden, dass die kalte Kühlluft den Werkzeugkörper kühlt bzw. dass die Temperatur der Kühlluft durch einen Wärmestrom aus dem Werkzeugkörper erhöht wird, wodurch Energieverluste in der Gesamtanlage gering gehalten werden können.

Vorteilhafterweise kann an der Unterseite des Lufttauschers ein weiteres Abluftrohr angeordnet sein, um die Abluft aus dem Extrusionswerkzeug zu leiten. Das weitere Abluftrohr kann zudem derart weitergebildet sein, dass eine Zuführung von Kühlluft zu dem oder den Kernluftkühlkanälen möglich ist. Dieses weitere Abluftrohr an der Unterseite des Lufttauschers kann beispielsweise als Ringkanal ausgebildet sein, wobei dieser Ringkanal eine Öffnung zentral aufweist für die Zuführung von Kühlluft in den oder die Kernkühlluftkanäle.

Des Weiteren kann die Erfindung vorsehen, dass das Abluftrohr der Kühleinheit am Kernabluftkanal befestigt ist und das Abluftrohr des Extrusionswerkzeuges am Mantelabluftkanal befestigt ist, wobei insbesondere das Abluftrohr der Kühleinheit und/oder das Abluftrohr des Extrusionswerkzeuges am Stegelement der Oberseite und/oder der Unterseite befestigt ist/sind. Zweckmäßigerweise ist es in einer weiteren Ausführungsform der Erfindung denkbar, dass das Abluftrohr der Kühleinheit am Kernabluftkanal verschweißt ist und das Abluftrohr des Extrusionswerkzeuges am Mantelabluftkanal verschweißt ist.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht auf einen Blaskopf einer Schlauchextrusionsanlage,
- Fig. 2: eine mögliche Detailansicht bzgl. des Blaskopfes gemäß Figur 1, wobei eine Kühleinheit auf einem Extrusionswerkzeug, in dem ein Schlauch extruierbar ist, angeordnet ist und
- Fig. 3: drei Schnittansichten gemäß Figur 2 innerhalb des Extrusionswerkzeuges zeigen,
- Fig. 4: den Blaskopf gemäß Figur 1 und Figur 2, wobei die Luftführung des Extrusionswerkzeug variiert ist und
- Fig. 5: das Extrusionswerkzeug gemäß Figur 1 und Figur 2 in einer weiteren Ausführungsform.

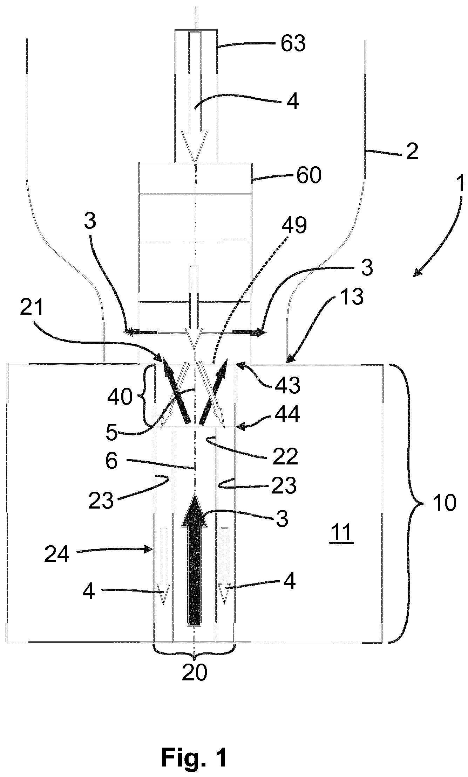

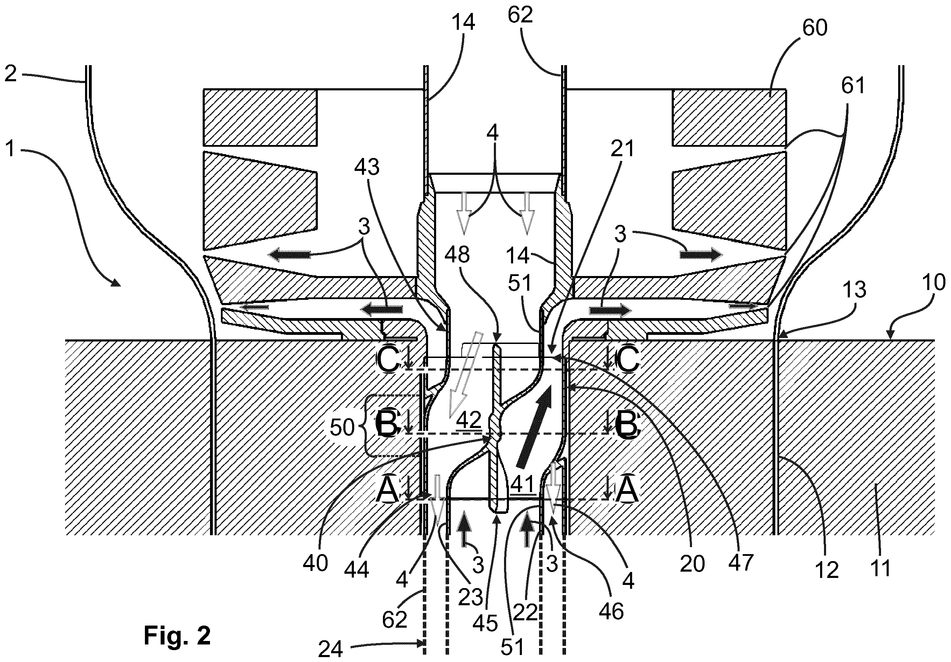

In Figur 1 sowie Figur 4 und Figur 5 ist ein Folienblaskopf 1 schematisch dargestellt, der in einer Schlauchextrusionsanlage zur Extrusion eines Schlauches 2 aus einer thermoplastischen Kunststoffschmelze zum Einsatz gebracht werden kann. Hierbei weist der Folienblaskopf 1 ein Extrusionswerkzeug 10 mit einem Werkzeugkörper 11 auf, der einen Schmelzkanal 12 (s. Fig. 2) zur Erzeugung des Schlauches 2 umfasst. Dieser Schmelzkanal 12 ist ringförmig ausgestaltet und weist eine Austrittsöffnung 13 an der Oberseite des Werkzeugkörpers 11 auf, aus der die erwärmte Kunststoffschmelze austritt. Über eine Kühleinheit 60 lässt sich eine Schlauchinnenkühlung realisieren, bei der Kühlluft 3 über Auslasskanäle 61 der Kühleinheit 60 in Richtung Schlauchinnenseite 2 strömt. Im vorliegenden Ausführungsbeispiel ist die Kühleinheit 60 als Etagenkühlung ausgeführt, bei der eine Vielzahl an übereinanderliegenden Auslasskanälen 61 vorgesehen sind, um in unterschiedlichen Höhen beabstandet zur Austrittsöffnung 13 den Schlauch 2 zu kühlen. Des Weiteren kann die durch den Werkzeugkörper 11 sich erstreckende Luftführung 20 erwärmte Abluft 4, die durch die Schlauchinnenkühlung entstanden ist, durch die Öffnung 21 in Richtung Luftführung 20 abgesaugt werden. Gemäß Figur 1 und Figur 2 sowie Figur 4 und Figur 5 weist die Luftführung 20 einen zentralen Kanal 22 für die Kühlluft 3 und einen Ringkanal 23, der den zentralen Kanal 22 umfasst, für die Abluft 4 auf. Ferner umfasst das Extrusionswerkzeug 10 einen Lufttauscher 40, der in der Luftführung 20 angeordnet ist. Der Lufttauscher 40 bewirkt, dass Kühlluft 3 vom zentralen Kanal 22 nach außen zum Werkzeugkörper 11 in Richtung der Öffnung 21 der Luftführung 20 gelenkt wird. Des Weiteren bewirkt der Lufttauscher 40, dass die Abluft 4, die von der Kühleinheit 60 in Richtung Werkzeugkörper 11 strömt, im Wesentlichen im Gegenstrom zur Kühlluft 3 nach außen zum Werkzeugkörper 11 zum Ringkanal 23 geleitet wird. Besonders vorteilhaft ist, dass die Kühlluft 3 nach außen zum Werkzeugkörper 11 im Bereich der Öffnung 21 der Luftführung 20 geführt wird, wo die Kühlluft 3 ohne wesentliche Strömungsverluste direkt in die Kühleinheit 60 sowie durch die Auslasskanäle 61 geführt wird, um wirkungsvoll den Schlauch 20 zu kühlen. Der Austritt der Kühlluft 3 liegt direkt an der Austrittsöffnung 13 der Kunststoffschmelze, sodass effizient in diesem Bereich des Schlauches 2 eine Kühlung eingeleitet werden kann. Der erfindungsgemäße Lufttauscher 40 benötigt zudem einen kleinen Bauraum innerhalb des Extrusionswerkzeuges 10, wobei die größte Strömung der Kühlluft 3 an den unteren Austrittsöffnungen 13 der Kühleinheit 60 erzielt werden kann, also nahe am Austritt der Kunststoffschmelze. Somit lassen sich kompakte Abmaße des Folienblaskopfes 1 mit kurzen Strömungswegen und geringen Druckverlusten erzielen, wobei gleichzeitig verbesserte Kühlleistungen am Austritt der Kunststoffschmelze erreicht werden.

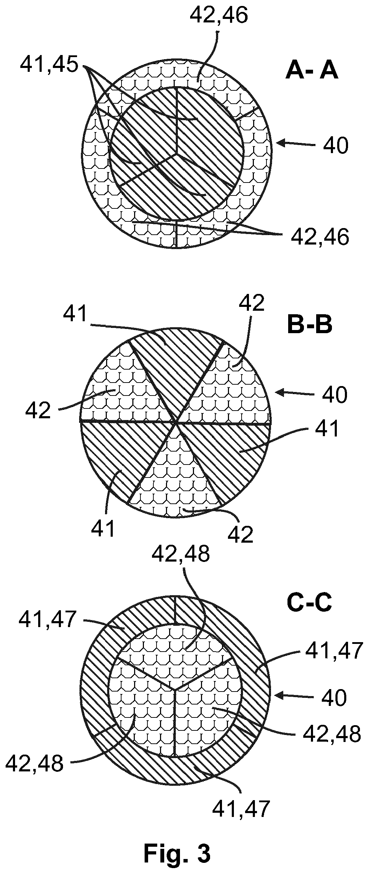

Wie in Figur 1 und Figur 2 sowie Figur 4 und Figur 5 zu erkennen ist, ist der Lufttauscher 40 im Bereich der Öffnung 21 der Luftführung 20 im Werkzeugkörper 11 angeordnet. Das bedeutet, dass der Lufttauscher 40 am oberen Randbereich des Werkzeugkörpers 11, der der Kühleinheit 60 zugewandt ist, positioniert ist. Ebenfalls ist es denkbar, dass der Lufttauscher 40 in einem definierten Abstand zur Öffnung 21 der Luftführung 20 im Werkzeugkörper 11 eingesetzt wird, welches explizit nicht gezeigt ist. Der Lufttauscher 40 weist mehrere Kühlluftkanäle 41 und mehrere Abluftkanäle 42 auf, die voneinander getrennt sind. Wie Figur 3 verdeutlicht ist der Lufttauscher 40 derart ausgebildet, dass drei Kühlluftkanäle 41 und drei Abluftkanäle 42 vorgesehen sind um zum einen Kühlluft 3 in Richtung Kühleinheit 30 zu transportieren sowie Abluft 4 aus der Kühleinheit 60 sowie aus dem Blaskopf 1 weg zu transportieren. Die Kühlluftkanäle 41 sowie die Abluftkanäle 42 können einen spiralförmigen Verlauf in Erstreckungsrichtung der Luftführung 20 auf. Der Verlauf kann auch im Wesentlichen geradlinig sein, wie es in den vorliegenden Ausführungsbeispielen gezeigt ist. Der Lufttauscher 40 weist eine zur Öffnung 21 der Luftführung 20 zugewandte Oberseite 43 und eine der Öffnung 21 der Luftführung 20 abgewandte Unterseite 44 auf. Die Kühlluftkanäle 41 an der Unterseite 44 sind als Kernkühlluftkanäle 45 ausgebildet, die durch drei Mantelabluftkanäle 46 des Abluftkanals 42 umfasst sind, welches in Figur 3 (Schnitt A-A) gezeigt ist.

In Erstreckungsrichtung zur Oberseite 43 verändert sich die Geometrie der Kernkühlluftkanäle 45 in drei Mantelluftkanäle 47, die an der Oberseite 43 durch drei Kernabluftkanäle 48 umfasst sind, s. Fig. 3 (Schnitt C-C). An der Unterseite 44 des Lufttauschers 40 liegen die Kernkühlluftkanäle 45 aneinander an sowie die drei Mantelabluftkanäle 46, wobei die Mantelabluftkanäle 46 die Kernkühlluftkanäle 45 umfassen, s. Fig. 3 (Schnitt A-A). An der Oberseite 43 des Lufttauschers 40 liegen die drei Kernabluftkanäle 48 und die Mantelkühlluftkanäle 47 aneinander an, wobei die Mantelkühlluftkanäle 47 die Kernabluftkanäle 48 umfassen, s. Fig. 3 (Schnitt C-C). Zudem weist die Luftführung 20 bzw. der Lufttauscher 40 eine Zwischenzone 50 auf, die zwischen der Oberseite 43 und der Unterseite 44 des Lufttauschers 40 liegt. In der Zwischenzone 50 verlaufen drei Kühlluftkanäle 41 und drei Abluftkanäle 42, wobei jeder Kühlluftkanal 41 zwischen zwei Abluftkanälen 42 angeordnet ist, s. Fig. 3 (Schnitt B-B). Somit sind die Kühlluftkanäle 41 des Lufttauschers 40 derart ausgebildet, dass diese aus Kernluftkanälen 45 nach außen zum Werkzeugkörper 11 sich erstrecken, durch die Zwischenzone 50 verlaufen bis die Geometrie der Kühlluftkanäle 41 in die Mantelkühlluftkanäle 47 übergeht. Spiegelbildlich verläuft die Geometrie der Abluftkanäle 42, die über die Kernabluftkanäle 48 sich in Mantelabluftkanäle 46 verändern.

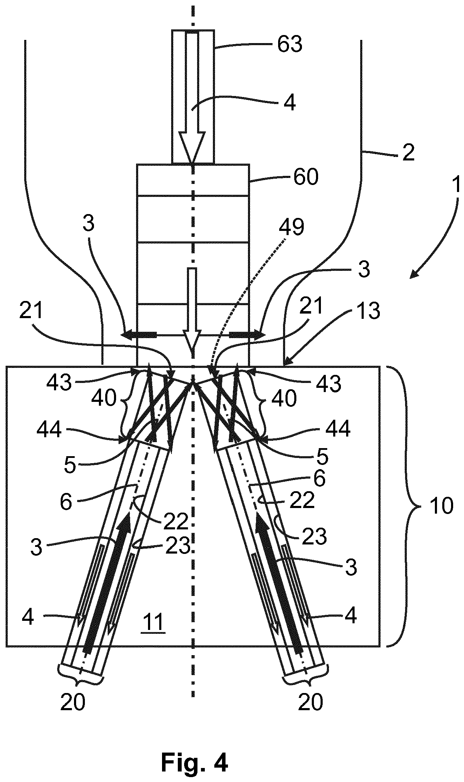

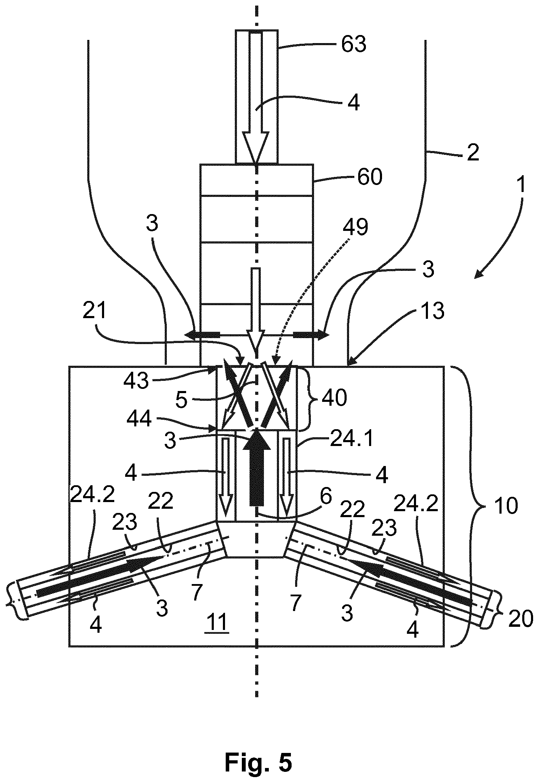

In Figur 1 sowie in Figur 4 und Figur 5 ist angedeutet, dass an der Oberseite 43 ein Filterelement 49 angeordnet sein kann, der eine Vergleichmäßigung des Geschwindigkeitsprofils der Kühlluft 3 bewirkt. Hierdurch lässt sich die Qualität des Schlauches 2 verbessern. In Figur 2 ist des Weiteren gezeigt, dass der Lufttauscher 40 an der Oberseite 43 und der Unterseite 44 ein Stegelement 51 aufweist, das als Montagehilfe dient, wobei das Stegelement 51 sich vorsprungartig aus der Oberseite 43 und aus der Unterseite 44 des Lufttauschers 40 erstreckt. An der Oberseite 43 ist ein Abluftrohr 14 befestigt, hier verschweißt, wobei das Stegelement 51 als Positionierungshilfe für den Werker dient, der das Abluftrohr 14 am Lufttauscher 40 befestigt. An der Unterseite 44 des Lufttauschers 40 ist ebenfalls ein Abluftrohr 62 eines Luftführungskörper 24 befestigbar, welches schematisch in Figur 2 gezeigt ist, wobei auch hier das Stegelement 51 als Montagehilfe bei der Befestigung des Rohres 62 dient.

Im vorliegenden Ausführungsbeispiel ist das Extrusionswerkzeug 10 derart ausgebildet, dass der Lufttauscher 40 am Werkzeugkörper 11 nachrüstbar ist. Der Lufttauscher 40 ist hierbei als Lasersinterbauteil ausgebildet, wobei der Lufttauscher 40 aus einem Stahl ausgeführt ist. Ebenfalls ist es denkbar, dass der Lufttauscher 40 aus einem thermisch isolierenden Material gebildet ist, wie z. B. Keramik. Oberhalb der Kühleinheit 60 ist ein Saugrohr 63 angeordnet, das bewirkt, dass zuverlässig Abluft 4 nach der Schlauchinnenkühlung in die Kühleinheit 60 geleitet wird.

Die Figur 1 sowie die Figuren 4 und 5 zeigen im Wesentlichen ein Extrusionswerkzeug 10 mit identischen Funktionen, wobei lediglich die Luftführung 20 leicht modifiziert ist. Gemäß Figur 1 weist die Luftführung 20 einen Luftführungskörper 24 auf, in dem der zentrale Kanal 22 und der Ringkanal 23 verlaufen. Gemäß Figur 4 sind zwei Luftführungskörper 24 vorgesehen, die jeweils einen zentralen Kanal 22 und einen Ringkanal 23 aufweisen. Jeder Luftführungskörper 24 ist mit einem eigenen Lufttauscher 40 verbunden. Gemäß Figur 5 ist ein zentraler Luftführungskörper 24.1 vorgesehen, an dem der Lufttauscher 40 angeordnet ist. An der Unterseite des zentralen Luftführungskörpers 24.1 sind seitlich verlaufende Luftführungskörper 24.2 angeordnet. Sämtliche Luftführungskörper 24.1, 24.2 weisen jeweils einen zentralen Kanal 22 und einen Ringkanal 23 auf, die untereinander strömungstechnisch verbunden sind, insbesondere sind sämtliche zentralen Kanäle 22 der Luftführungskörper 24.1, 24.2 strömungstechnisch miteinander verbunden und vom Ringkanal 23 aller Luftführungskörper 24.1, 24.2 getrennt.

Gemäß Figur 5 liegt die Achse 5 der Längserstreckung des Lufttauschers 40 auf der Achse 6 der Längserstreckung des zentralen Luftführungskörpers 24.1. Zudem weist die Achse 7 der Längserstreckung des seitlich verlaufenden Luftführungskörpers 24.2 einen Winkel zur Achse 5 der Längserstreckung des Lufttauschers 40 auf.

Gemäß Figur 4 liegt die Achse 5 der Längserstreckung des Lufttauschers 40 auf der Achse 6 der Längserstreckung des jeweiligen Luftführungskörpers 24. Hierbei liegen die Luftführungskörper 24 zueinander in einem Winkel.

Die Funktionsweise bzw. die technische Ausgestaltung des Lufttauschers 40 gemäß Figur 3 lässt sich ohne weiteres auf die eingesetzten Lufttauscher 40 gemäß Figur 4 und Figur 5 beziehen.

### Bezugszeichenliste

- 1: Blaskopf, Folienblaskopf
- 2: Schlauch
- 3: Kühlluft
- 4: Abluft
- 5: Achse von 40
- 6: Achse von 24
- 7: Achse von 24

- 10: Extrusionswerkzeug
- 11: Werkzeugkörper
- 12: Schmelzkanal
- 13: Austrittsöffnung
- 14: Abluftrohr

- 20: Luftführung
- 21: Öffnung
- 22: zentraler Kanal
- 23: Ringkanal
- 24: Luftführungskörper
- 24.1: Luftführungskörper
- 24.2: Luftführungskörper

- 40: Lufttauscher
- 41: Kühlluftkanal
- 42: Abluftkanal
- 43: Oberseite
- 44: Unterseite
- 45: Kernkühlluftkanal
- 46: Mantelabluftkanal
- 47: Mantelkühlluftkanal
- 48: Kernabluftkanal
- 49: Filterelement

- 50: Zwischenzone
- 51: Stegelement

- 60: Kühleinheit
- 61: Auslasskanal
- 62: Abluftrohr
- 63: Saugrohr

## Patentansprüche

1. Extrusionswerkzeug (10) für einen Folienblaskopf (1) einer Schlauchextrusionsanlage zur Extrusion eines Schlauches (2) aus einer Kunststoffschmelze mit
einem Werkzeugkörper (11), der einen Schmelzkanal (12) zur Erzeugung des Schlauches (2) aufweist, wobei der Schmelzkanal (12) eine ringförmige Austrittsöffnung (13) für die Kunststoffschmelze aufweist,
einer durch den Werkzeugkörper (11) sich erstreckenden Luftführung (20), durch die Kühlluft (3) durch eine Öffnung (21) der Luftführung (20) zur Schlauchinnenkühlung strömbar ist und durch die aus der Schlauchinnenkühlung erwärmte Abluft (4) durch die Öffnung (21) der Luftführung (20) absaugbar ist,
**dadurch gekennzeichnet,**
**dass** die Luftführung (20) einen zentralen Kanal (22) für die Kühlluft (3) und einen Ringkanal (23), der den zentralen Kanal (22) umfasst, für die Abluft (4) aufweist,
**dass** die Luftführung (20) mindestens einen Lufttauscher (40) aufweist, wobei der Lufttauscher (40) derart innerhalb des Werkzeugkörpers (11) positioniert ist, dass der Lufttauscher (40) die Kühlluft (3) vom zentralen Kanal (22) nach außen zum Werkzeugkörper (11) in Richtung der Öffnung (21) der Luftführung (20) lenkt und die Abluft (4) im Wesentlichen im Gegenstrom zur Kühlluft (3) in Richtung zum Werkzeugkörper (11) in den Ringkanal (23) leitet, wobei der Lufttauscher (40) eine zur Öffnung (21) der Luftführung (20) zugewandte Oberseite (43) und eine der Öffnung (21) der Luftführung (20) abgewandte Unterseite (44) aufweist, wobei der Kühlluftkanal (41) an der Unterseite (44) als Kernkühlluftkanal (45) ausgebildet ist, der durch einen Mantelabluftkanal (46) des Abluftkanals (42) umfasst ist, wobei in Erstreckungsrichtung zur Oberseite (43) des Lufttauschers (40) die Geometrie des Kernkühlluftkanals (45) sich in einen Mantelkühlluftkanal (47) verändert, der an der Oberseite (43) einen Kernabluftkanal (48) umfasst.

2. Extrusionswerkzeug (10) nach Anspruch 1,
**dadurch gekennzeichnet,**
**dass** der Lufttauscher (40) im Bereich der Öffnung (21) der Luftführung (20) im Werkzeugkörper (11) angeordnet ist.

3. Extrusionswerkzeug (10) nach Anspruch 1 oder 2,
**dadurch gekennzeichnet,**
**dass** der Lufttauscher (40) beabstandet zur Öffnung (21) der Luftführung (20) im Werkzeugkörper (11) angeordnet ist.

4. Extrusionswerkzeug (10) nach einem der vorhergehenden Ansprüche,
**dadurch gekennzeichnet,**
**dass** der Werkzeugkörper (11) derart ausgeführt ist, dass die Position des Lufttauschers (40) innerhalb der Luftführung (20) variabel einstellbar ist
und/oder dass ein Filterelement (49) am und/oder im Lufttauscher (40) angeordnet ist, das eine Vergleichmäßigung des Geschwindigkeitsprofils der Kühlluft (3) bewirkt.

5. Extrusionswerkzeug (10) nach einem der vorhergehenden Ansprüche,
**dadurch gekennzeichnet,**
**dass** der Lufttauscher (40) mindestens einen Kühlluftkanal (41) und mindestens einen Abluftkanal (42) aufweist, die voneinander getrennt sind und/oder dass der Lufttauscher (40) mindestens zwei Kühlluftkanäle (41) und mindestens zwei Abluftkanäle (42) aufweist, wobei insbesondere der Lufttauscher (40) mindestens drei Kühlluftkanäle (41) und mindestens drei Abluftkanäle (42) aufweist.

6. Extrusionswerkzeug (10) nach Anspruch 5,
**dadurch gekennzeichnet,**
**dass** mindestens ein Kühlluftkanal (41) und/oder mindestens ein Abluftkanal (42) einen spiralförmigen Verlauf aufweist.

7. Extrusionswerkzeug (10) nach einem der vorhergehenden Ansprüche,
**dadurch gekennzeichnet,**
**dass** mehrere Kernkühlluftkanäle (45) und mehrere Mantelabluftkanäle (46) und mehrere Mantelkühlluftkanäle (47) und mehrere Kernabluftkanäle (46) vorgesehen sind.

8. Extrusionswerkzeug (10) nach einem der vorhergehenden Ansprüche,
**dadurch gekennzeichnet,**
**dass** an der Unterseite (44) des Lufttauschers (40) die Kernkühlluftkanäle (45) aneinander anliegen und die Mantelabluftkanäle (46) aneinander anliegen, wobei die Mantelabluftkanäle (46) die Kernkühlluftkanäle (45) umfassen, und
an der Oberseite (43) des Lufttauschers (40) die Kernabluftkanäle (48) aneinander anliegen und die Mantelkühlluftkanäle (47) aneinander anliegen, wobei die Mantelkühlluftkanäle (47) die Kernabluftkanäle (48) umfassen.

9. Extrusionswerkzeug (10) nach einem der vorhergehenden Ansprüche,
**dadurch gekennzeichnet,**
**dass** die Luftführung (20) eine Zwischenzone (50) aufweist, die zwischen der Oberseite (43) und der Unterseite (44) des Lufttauschers (40) liegt, wobei in der Zwischenzone (50) mehrere Kühlluftkanäle (41) und Abluftkanäle (42) verlaufen, wobei jeder Kühlluftkanal (41) zwischen zwei Abluftkanälen (42) angeordnet ist.

10. Extrusionswerkzeug (10) nach einem der vorhergehenden Ansprüche,
**dadurch gekennzeichnet,**
**dass** der Lufttauscher (40) an der Oberseite (43) und/oder an der Unterseite (44) ein Stegelement (51) aufweist, das als Montagehilfe dient, wobei das Stegelement (51) sich vorsprungartig aus der Oberseite (43) und/oder aus der Unterseite (44) des Lufttauschers (40) erstreckt.

11. Extrusionswerkzeug (10) nach einem der vorhergehenden Ansprüche,
**dadurch gekennzeichnet,**
**dass** der Lufttauscher (40) als ein Lasersinterbauteil ausgeführt ist.

12. Extrusionswerkzeug (10) nach einem der vorhergehenden Ansprüche,
**dadurch gekennzeichnet,**
**dass** die Luftführung (20) innerhalb des Werkzeugkörpers (11) mindestens einen Luftführungskörper (24) aufweist, in dem der zentrale Kanal (22) und der Ringkanal (23) gebildet sind,
wobei insbesondere mehrere Luftführungskörper (24) vorgesehen sind, wobei insbesondere jedem Luftführungskörper (24) ein eigener Lufttauscher (40) zugeordnet ist.

13. Extrusionswerkzeug (10) nach Anspruch 12 ,
**dadurch gekennzeichnet,**
**dass** ein zentraler Luftführungskörper (24.1) an dem Lufttauscher (40) angeordnet ist,
wobei die dem Lufttauscher (40) abgewandte Seite des zentralen Luftführungskörpers (24.1) mit mehreren seitlich verlaufenden Luftführungskörpern (24.2) verbunden ist.

14. Extrusionswerkzeug (10) nach Anspruch 12 oder 13 ,
**dadurch gekennzeichnet,**
**dass** die Achse (5) der Längserstreckung des Lufttauschers (40) auf der Achse (6) der Längserstreckung des zentralen Luftführungskörpers (24.1) oder des Luftführungskörpers (24) liegt, insbesondere das die Achse (7) der Längserstreckung des seitlich verlaufenden Luftführungskörpers (24.2) einen Winkel zur Achse (5) der Längserstreckung des Lufttauschers (40) aufweist.

15. Blaskopf (1) für eine Schlauchextrusionsanlage zur Extrusion eines Schlauches (2) aus einer Kunststoffschmelze mit
einem Extrusionswerkzeug (10) nach einem der Ansprüche 1 bis 14 , und
einer Kühleinheit (60), die auf dem Extrusionswerkzeug (10) angeordnet ist, wobei die Kühleinheit (60) Auslasskanäle (61) für die Schlauchinnenkühlung, durch die die Kühlluft (3) leitbar ist, und mindestens ein Abluftrohr (14) für die Absaugung der Abluft (4) aufweist,
wobei insbesondere an der Unterseite (44) des Lufttauschers (40) ein weiteres Abluftrohr (62) angeordnet ist, um die Abluft (4) aus dem Extrusionswerkzeug (10) zu leiten.

16. Blaskopf (1) nach Anspruch 15,
**dadurch gekennzeichnet,**
**dass** das Abluftrohr (14) der Kühleinheit (60) am Kernabluftkanal (48) befestigt ist und das Abluftrohr (62) des Extrusionswerkzeuges (10) am Mantelabluftkanal (46) befestigt ist, wobei insbesondere das Abluftrohr (14) der Kühleinheit (60) und/oder das Abluftrohr (62) des Extrusionswerkzeuges (10) am Stegelement (51) der Oberseite (43) und/oder der Unterseite (44) befestigt ist/sind,
wobei insbesondere das Abluftrohr (14) der Kühleinheit (60) am Kernabluftkanal (48) verschweißt ist und das Abluftrohr (62) des Extrusionswerkzeuges (10) am Mantelabluftkanal (46) verschweißt ist.

## Claims

1. Extrusion tool (10) for a film blow head (1) of a tube extrusion plant for extrusion of a tube (2) from a plastic melt with
- a tool body (11) which comprises a melt channel (12) for producing the tube (2), wherein the melt channel (12) comprises an annular outlet opening (13) for the plastic melt,
- an air guide (20) which extends through the tool body (11), wherein cooling air (3) may flow through an opening (21) of the air guide (20) for internal cooling of the tube, and wherein the exhaust air (4), heated from the internal cooling of the tube, may be sucked out through the opening (21) of the air guide (20),
**characterized in that**
- the air guide (20) comprises a central channel (22) for the cooling air (3) and an annular channel (23) comprising the central channel (22), for the exhaust air (4)
- the air guide (20) comprises at least one air exchanger (40), wherein the air exchanger (40) is so positioned within the tool body (11) that the air exchanger (40) deflects the cooling air (3) from the central channel (22) outwards to the tool body (11) in the direction of the opening (21) of the air guide (20), and guides the exhaust air (4) into the annular channel (23) substantially counter to the cooling air (3) in the direction of the tool body (11), wherein the air exchanger (40) comprises an upperside (43) facing the opening (21) of the air guide (20) and an underside (44) facing away from the opening (21) of the air guide (20), wherein the cooling air channel (41) is arranged on the underside (44) as the core cooling air channel (45) and extends into a jacket cooling air channel (46) of the exhaust air channel (42), wherein in the extension direction to the upperside (43) of the air exchanger (40), the geometry of the core cooling air channel (45) changes into a jacket cooling air channel (47), which comprises a core exhaust channel (48) on the upperside (43).

2. Extrusion tool (10) according to claim 1,
**characterized in that**
the air exchanger (40) is arranged in the region of the opening (21) of the air guide (20) in the tool body (11).

3. Extrusion tool (10) according to claim 1 or 2,
**characterized in that**
the air exchanger (40) is arranged at a distance from the opening (21) of the air guide (20) in the tool body (11).

4. Extrusion tool (10) according to one of the preceding claims,
**characterized in that**
the tool body (11) is designed so that the position of the air exchanger (40) is adjustable inside the air guide (20), and/or a filter element (49) is arranged on and/or in the air exchanger (40) which results in an equalization of the speed profile of the cooling air (3).

5. Extrusion tool (10) according to one of the preceding claims,
**characterized in that**
the air exchanger (40) comprises at least one cooling air channel (41) and at least one exhaust air channel (42) which are separated from each other and/or wherein the air exchanger (40) comprises at least two cooling air channels (41) and at least two exhaust air channels (42), wherein, in particular, the air exchanger (40), comprises at least three cooling air channels (41) and at least three exhaust air channels (42).

6. Extrusion tool (10) according to claim 5,
**characterized in that**
at least one cooling air channel (41) and/or at least one exhaust air channel (42) has a helical form.

7. Extrusion tool (10) according to one of the preceding claims,
**characterized in that**
a plurality of core cooling air channels (45) and a plurality of jacket exhaust air channels (46), and a plurality of jacket cooling air channels (47) and a plurality of core exhaust air channels (46), are provided,

8. Extrusion tool (10) according to one of the preceding claims,
**characterized in that**
on the underside (44) of the air exchanger (40), the core cooling air channels (45) abut one another, while the jacket exhaust air channels (46) abut one another, wherein the jacket exhaust channels (46) enclose the core cooling air channels (45), and
on the upperside (43) of the air exchanger (40), the core exhaust air channels (48) abut one another, while the jacket cooling air channels (47) abut one another, wherein the jacket cooling air channels (47) enclose the core exhaust air channels (48).

9. Extrusion tool (10) according to one of the preceding claims,
**characterized in that**
the air guide (20) comprises an intermediate zone (50) between the upperside (43) and the underside (44) of the air exchanger (40), wherein a plurality of cooling air channels (41) and exhaust air channels (42) run in the intermediate zone (50), wherein each cooling air channel (41) is arranged between two exhaust air channels (42).

10. Extrusion tool (10) according to one of the preceding claims,
**characterized in that**
on the upperside (43) and/or on the underside (44), the air exchanger (40) comprises a bridge element (51) which serves as an assembly aid, wherein the bridge element (51) extends from the upperside (43) and/or from the underside (44) of the air exchanger (40) in the form of a projection.

11. Extrusion tool (10) according to one of the preceding claims,
**characterized in that**
the air exchanger (40) is configured as a laser sintering component.

12. Extrusion tool (10) according to one of the preceding claims,
**characterized in that**
the air guide (20) comprises at least one air guide body (24) inside the tool body (11), in which the central channel (22) and the annular channel (23) are formed,
wherein, in particular, a plurality of air guide bodies (24) are provided, wherein, in particular, each air guide body (24) is assigned its own air exchanger (40).

13. Extrusion tool (10) according to claim 12,
**characterized in that**
a central air guide body (24.1) is arranged on the air exchanger (40), wherein the side of the central air guide body (24.1) facing away from the air exchanger (40) is connected to a plurality of laterally extending air guide bodies (24.2).

14. Extrusion tool (10) according to claim 12 or 13,
**characterized in that**
a multiple of air guide bodies (24) are provided, wherein, in particular, each air guide body (24) is assigned its own air exchanger (40), and
the axis (5) of the longitudinal extension of the air exchanger (40) lies on the axis (6) of the longitudinal extension of the central air guide body (24.1) or the air guide bodies (24), wherein, in particular, the axis (7) of the longitudinal extension of the laterally extending air guide bodies (24.2) comprises an angle to the axis (5) of the longitudinal extension of the air exchanger (40).

15. Blow head (1) for a tube extrusion system for extrusion of a tube (2) from a plastic melt with
- an extrusion tool (10) according to one of the claims 1 to 14, and
- a cooling unit (60) which is arranged on the extrusion tool (10), wherein the cooling unit (60) comprises outlet channels (61) for the internal cooling of the tube, and through which cooling air (3) may be guided, and at least one exhaust air pipe (14) to exhaust the exhaust air (4),
- wherein, in particular, a further exhaust air pipe (62) is arranged on the underside (44) of the air exchanger (40), in order to guide the exhaust air (4) from the extrusion tool (10).

16. Blow head according to claim 15,
**characterized in that**
the exhaust air pipe (14) of the cooling unit (60) is attached to the core exhaust air channel (48), while the exhaust air pipe (62) of the extrusion tool (10) is attached to the jacket exhaust air channel (46),
wherein, in particular, the exhaust air pipe (14) of the cooling unit (60) and/or the exhaust air pipe (62) of the extrusion tool (10) is/are fastened to the bridge member (51) of the upperside (43) and/or the underside (44),
wherein, in particular, the exhaust air pipe (14) of the cooling unit (60) is welded to the core exhaust air channel (48), while the exhaust air pipe (62) of the extrusion tool (10) is welded to the jacket exhaust air channel (46).

## Revendications

1. Outil d'extrusion (10) pour une tête de soufflage de fiilm (1) d'une installation d'extrusion de tuyaux pour l'extrusion d'un tuyau (2) en matière plastique en fusion, avec
un corps d'outil (11), qui comprend un canal de fusion (12) pour la production du tuyau (2), le canal de fusion (12) comprenant une ouverture de sortie annulaire (13) pour la matière plastique en fusion,
un guidage d'air (20) s'étendant à travers le corps d'outil (11), à travers lequel de l'air de refroidissement (3) peut s'écouler par une ouverture (21) du guidage d'air (20) pour le refroidissement interne du tuyau et grâce auquel l'air chaud évacué (4) résultat du refroidissement interne du tuyau peut être aspiré par l'ouverture (21) du guidage (20),
**caractérisé en ce que**
le guidage d'air (20) comprend un canal central (22) pour l'air de refroidissement (3) et un canal annulaire (23), qui entoure le canal central (22), pour l'air évacué (4),
le guidage d'air (20) comprend au moins un échangeur d'air (40), l'échangeur d'air (40) étant positionné à l'intérieur du corps d'outil (11) de façon à ce que l'échangeur d'air (40) dévie l'air de refroidissement (3) du canal central (22) vers l'extérieur vers le corps d'outil (11) en direction de l'ouverture (21) du guidage d'air (20) et conduise l'air évacué (4) globalement à contre-courant de l'air de refroidissement (3) en direction du corps d'outil (11) vers le canal annulaire (23), l'échangeur d'air (40) comprenant un côté supérieur (43) orienté vers l'ouverture (21) du guidage d'air (20) et un côté inférieur (44) opposé à l'ouverture (21) du guidage d'air (20), le canal d'air de refroidissement (41) étant réalisé au niveau du côté inférieur (44) comme un canal d'air de refroidissement central (45) qui est entourée par un canal d'évacuation d'air externe (46) du canal d'évacuation d'air (42), moyennant quoi, dans la direction d'extension vers le côté supérieur (43) de l'échangeur d'air (40), la géométrie du canal d'air de refroidissement central (45) variant dans un canal d'air de refroidissement externe (47) qui entoure un canal d'évacuation d'air central (48) au niveau du côté supérieur (43).

2. Outil d'extrusion (10) selon la revendication 1,
**caractérisé en ce que**
l'échangeur d'air (40) est disposé au niveau de l'ouverture (21) du guidage d'air (20) dans le corps d'outil (11).

3. Outil d'extrusion (10) selon la revendication 1 ou 2,
**caractérisé en ce que**
l'échangeur d'air (40) est disposé à une certaine distance de l'ouverture (21) du guidage d'air (20) dans le corps d'outil (11).

4. Outil d'extrusion (10) selon l'une des revendications précédentes,
**caractérisé en ce que**
le corps d'outil (11) est conçu de façon à ce que la position de l'échangeur d'air (40) à l'intérieur du guidage d'air (20) soit réglable de manière variable,
et/ou **en ce qu'**un élément filtrant (49) est disposé sur et/ou dans l'échangeur d'air (40), qui permet une uniformisation du profil de vitesses de l'air de refroidissement (3).

5. Outil d'extrusion (10) selon l'une des revendications précédentes,
**caractérisé en ce que**
l'échangeur d'air (40) comprend au moins un canal d'air de refroidissement (41) et au moins un canal d'évacuation d'air (42), qui sont séparés l'un de l'autre
et/ou **en ce que** l'échangeur d'air (40) comprend au moins deux canaux d'air de refroidissement (41) et au moins deux canaux d'air de refroidissement (42), plus particulièrement l'échangeur d'air (40) comprend au moins trois canaux d'air de refroidissement (41) et au moins trois canaux d'évacuation d'air (42).

6. Outil d'extrusion (10) selon la revendication 5,
**caractérisé en ce que**
au moins un canal d'air de refroidissement (41) et/ou au moins un canal d'évacuation d'air (42) présente une extension en spirale.

7. Outil d'extrusion (10) selon l'une des revendications précédentes,
**caractérisé en ce que**
plusieurs canaux d'air de refroidissement centraux (45) et plusieurs canaux d'évacuation d'air externes (46) et plusieurs canaux d'air de refroidissement externes (47) et plusieurs canaux d'évacuation d'air centraux (46) sont prévus.

8. Outil d'extrusion (10) selon l'une des revendications précédentes,
**caractérisé en ce que**
au niveau du côté inférieur (44) de l'échangeur d'air (40), les canaux d'air de refroidissement centraux (45) s'appuient les uns contre les autres et les canaux d'évacuation d'air externes (46) s'appuient les uns contre les autres, les canaux d'évacuation externes (46) entourant les canaux d'air de refroidissement centraux (45) et
au niveau du côté supérieur (43) de l'échangeur d'air (40), les canaux d'évacuation d'air centraux (48) s'appuient les uns contre les autres et les canaux d'air de refroidissement externes (47) s'appuient les uns contre les autres, les canaux d'air de refroidissement externes (47) entourant les canaux d'évacuation d'air centraux (48).

9. Outil d'extrusion (10) selon l'une des revendications précédentes,
**caractérisé en ce que**
le guidage d'air (20) comprend une zone intermédiaire (50) qui se trouve entre le côté supérieur (43) et le côté inférieur (44) de l'échangeur d'air (40), plusieurs canaux d'air de refroidissement (41) et canaux d'évacuation d'air (42) s'étendant dans la zone intermédiaire (50), chaque canal d'air de refroidissement (41) étant disposé entre deux canaux d'évacuation d'air (42).

10. Outil d'extrusion (10) selon l'une des revendications précédentes,
**caractérisé en ce que**
l'échangeur d'air (40) comprend, au niveau du côté supérieur (43) et/ou au niveau du côté inférieur (44), un élément de nervure (51), qui sert d'aide au montage, l'élément de nervure (51) s'étendant à la manière d'une saillie à partir du côté supérieur (43) et/ou du côté inférieur (44) de l'échangeur d'air (40).

11. Outil d'extrusion (10) selon l'une des revendications précédentes,
**caractérisé en ce que**
l'échangeur d'air (40) est conçu comme un composant fritté par laser.

12. Outil d'extrusion (10) selon l'une des revendications précédentes,
**caractérisé en ce que**
le guidage d'air (20) comprend, à l'intérieur du corps d'outil (11), au moins un corps de guidage d'air (24), dans lequel sont réalisés le canal central (22) et le canal annulaire (23),
plus particulièrement plusieurs corps de guidage d'air (24) étant prévus, plus particulièrement un échangeur d'air (40) correspondant à chaque corps de guidage d'air (24).

13. Outil d'extrusion (10) selon la revendication 12,
**caractérisé en ce que**
un corps de guidage d'air central (24.1) est disposé sur l'échangeur d'air (40), le côté du corps de guidage d'air central (24.1) opposé à l'échangeur d'air (40) étant relié avec plusieurs corps de guidage d'air (24.2) s'étendant latéralement.

14. Outil d'extrusion (10) selon la revendication 12 ou 13,
**caractérisé en ce que**
plusieurs corps de guidage d'air (24) sont prévus, plus particulièrement un échangeur (40) correspondant à chaque corps de guidage d'air (24) et
l'axe (5) de l'extension longitudinale (40) se trouve sur l'axe (6) de l'extension longitudinale du corps de guidage d'air central (34.1) ou du corps de guidage d'air (24), plus particulièrement l'axe (7) de l'extension longitudinale du corps de guidage d'air (24.2) s'étendant latéralement formant un angle avec l'axe (5) de l'extension longitudinale de l'échangeur d'air (40).

15. Tête de soufflage (1) pour une installation d'extrusion de tuyaux pour l'extrusion d'un tuyau (2) en matière plastique en fusion, avec
un outil d'extrusion (10) selon l'une des revendications 1 à 14 et
une unité de refroidissement (60), qui est disposée sur l'outil d'extrusion (10), l'unité de refroidissement (60) comprenant des canaux de sortie (61) pour le refroidissement interne du tuyau, à travers lesquels l'air de refroidissement (3) peut s'écouler, et au moins un tube d'évacuation d'air (14) pour l'aspiration de l'air évacué (4),
plus particulièrement un autre tube d'évacuation d'air (62) étant disposé sur le côté inférieur (44) de l'échangeur d'air (40) afin de conduire l'air évacué (4) hors de l'outil d'extrusion (10).

16. Tête de soufflage (1) selon la revendication 15,
**caractérisée en ce que**
le tube d'évacuation d'air (14) de l'unité de refroidissement (60) est fixé au canal d'évacuation d'air central (48) et le tube d'évacuation d'air (62) de l'outil d'extrusion (10) est fixé au canal d'évacuation d'air externe (46), plus particulièrement le tube d'évacuation d'air (14) de l'unité de refroidissement (60) et/ou le tube d'évacuation d'air (62) de l'outil d'extrusion (10) est/sont fixé(s) sur l'élément de nervure (51) du côté supérieur (43) et/ou du côté inférieur (44),
plus particulièrement le tube d'évacuation d'air (14) de l'unité de refroidissement (60) étant soudé sur le canal d'air d'évacuation d'air central (48) et le tube d'évacuation d'air (62) de l'outil d'extrusion (10) étant soudé sur le canal d'évacuation d'air externe (46).
